# EUROPEAN PATENT APPLICATION

(11) **EP 4 203 474 A1**
(43) Date of publication of application: **28.06.2023**
(21) Application number: 21868571.7
(22) Date of filing: 11.09.2021
(51) Int. Cl.: H04N 19/137

(54) **IMAGE PROCESSING METHOD AND APPARATUS, DEVICE, AND COMPUTER READABLE STORAGE MEDIUM**

(30) Priority: 17.09.2020 CN 202010981884
(71) Applicant: Huawei Technologies Co., Ltd., Shenzhen, Guangdong 518129 (CN)
(72) Inventor: ZHOU, Kai, Shenzhen, Guangdong 518129 (CN); LIU, Hongbo, Shenzhen, Guangdong 518129 (CN)
(74) Representative: Isarpatent
(86) International application number: PCT/CN2021/117864
(87) International publication number: WO 2022/057746

(57) **Abstract**

This application provides an image processing method and apparatus, a device, and a computer-readable storage medium, and is used in the field of computer vision. The method may include: A first image device obtains a compressed image of a raw image, and decompresses the compressed image, to obtain a first decompressed image; the first image device determines target difference information based on difference information between the raw image and the first decompressed image; the first image device further compresses the target difference information, to obtain compressed target difference information; and the first image device finally sends the compressed image and the compressed target difference information to a second image device, so that the second image device restores an image based on the received information. This application helps reduce a precision loss between the image restored by the second image device and the raw image.

## Description

This application claims priority to Chinese Patent Application No. 202010981884.9, filed with the China National Intellectual Property Administration on September 17, 2020 and entitled "IMAGE PROCESSING METHOD AND APPARATUS, DEVICE, AND COMPUTER-READABLE STORAGE MEDIUM", which is incorporated herein by reference in its entirety.

### TECHNICAL FIELD

This application relates to the field of computer vision, and in particular, to an image processing method and apparatus, a device, and a computer-readable storage medium.

### BACKGROUND

Image compression is one of basic technologies in the field of computer vision, and aims to remove redundant data and reduce an amount of data required for representing an image, to save storage space. With the development of mobile communication technologies, how to implement image compression in a mobile environment, to reduce transmission bandwidth is one of hot topics in current computer vision research. Especially in the industrial field, an image is captured by an industrial camera, compressed, and transmitted to a server end. The server end decompresses and analyzes the image, and triggers corresponding instructions, to control and monitor workpiece processing, assembly, and inspection during production. However, in an actual application process, a precision loss error between a decompressed image and a raw image is large. As a result, recognition on a server end is affected, and an analysis result is further affected.

Therefore, how to reduce a precision loss error between a decompressed image and a raw image is an urgent technical problem to be resolved.

### SUMMARY

This application provides an image processing method and apparatus, a device, and a computer-readable storage medium, to help reduce a precision loss between an image restored by a second image device and a raw image.

According to a first aspect, this application provides an image processing method, and the method is applied to a first image device. The method may be performed by a first image device, or may be performed by an apparatus (for example, a processor or a chip) in the first image device. The method uses a first image device as an example, and may include: obtaining a compressed image of a raw image; decompressing the compressed image, to obtain a first decompressed image; determining target difference information, where the target difference information is obtained based on difference information between the raw image and the first decompressed image; compressing the target difference information, to obtain compressed target difference information; and sending the compressed image and the compressed target difference information to a second image device.

According to the method provided in the first aspect, daily experience in using a compressed image may be learned. After compressing the raw image, the compressed image is sent to the second image device. The second image device directly decompresses the compressed image, and the second image device may directly identify and analyze the decompressed image. If an image obtained by the second image device by decompressing the received compressed image has a large precision error relative to the raw image, subsequent recognition and analysis are affected to some extent. Therefore, in this embodiment of this application, based on the original compressed image, the target difference information between the first decompressed image obtained by compressing the compressed image and the raw image is added. A precision loss between the raw image and the first decompressed image can be obtained through analysis by using the target difference information, so that the second image device performs restoration processing on the decompressed image, to obtain a decompressed image with higher precision, to reduce a precision loss between the decompressed image and the raw image, and improve precision of the decompressed image. Then, the target difference information is compressed and then sent to the second image device, to reduce an amount of data that needs to be transmitted.

In a possible implementation, both the difference information and the target difference information include an image matrix, and each image matrix includes a plurality of image element values. The determining target difference information includes: changing, to a preset value, an image element value that is in the image matrix included in the difference information and that falls within a preset threshold range, to obtain the image matrix included in the target difference information. In this embodiment of this application, after obtaining the first decompressed image obtained through decompression, the first image device may perform matrix subtraction processing on the image matrix included in the first decompressed image and the image matrix included in the raw image, to obtain the difference information between the first decompressed image and the raw image. To reduce a data amount in a process of storing and transmitting the difference information, a part that has a large difference between the two images is retained, and an image element value that is in the matrix in the difference information and that falls within a preset threshold range is changed to a preset value, to obtain the image matrix included in the target difference information. It may be understood that, in the changed image matrix, a quantity of same image element values increases, so that an amount of transmitted data can be reduced. A precision loss between the image restored by the second image device and the raw image may be reduced by using the target difference information.

In a possible implementation, the obtaining a compressed image of a raw image includes: receiving the raw image from a photographing apparatus; obtaining a reference image corresponding to the raw image; and compressing the raw image based on the reference image, to obtain the compressed image. In this embodiment of this application, when compressing the raw image, the first image device may obtain the raw image photographed by the photographing apparatus and the reference image corresponding to the raw image. The image is compressed based on a relationship between the corresponding reference image and the raw image, that is, compression is performed by using the difference information between the raw image and the reference image. This can improve compression efficiency of the raw image, and can also be widely used in a scenario in which an image needs to be compressed in real time.

In a possible implementation, the obtaining a compressed image of a raw image includes: obtaining the raw image through photographing; obtaining a reference image corresponding to the raw image; and compressing the raw image based on the reference image, to obtain the compressed image. In this embodiment of this application, the first image device may include the photographing apparatus, and may use a photographed image as the raw image, and obtain the corresponding reference image for compression. Device redundancy is reduced by deploying the photographing apparatus in the first image device. In addition, the image is compressed based on a relationship between the corresponding reference image and the raw image, that is, compression is performed by using the difference information between the raw image and the reference image. This can improve compression efficiency of the raw image, and can also be widely used in a scenario in which an image needs to be compressed in real time.

In a possible implementation, the method further includes: sending the reference image to the second image device. In this embodiment of this application, the reference image corresponding to the raw image may be sent to the second image device, so that the second image device can decompress the compressed image of the raw image by using the reference image, so that the second image device can restore the decompressed image of the raw image based on the target difference information, to obtain an image with higher precision and reduce a precision loss between the image restored by the second image device and the raw image.

According to a second aspect, an embodiment of this application provides an image processing method, and the method is applied to a second image device. The method may be performed by a second image device, or may be performed by an apparatus (for example, a processor or a chip) in the second image device. The method uses the second image device as an example, and may include: receiving, from a first image device, a compressed image of a raw image and compressed target difference information, where target difference information is obtained based on difference information between the raw image and a first decompressed image; decompressing the compressed image, to obtain the first decompressed image; and performing image processing on the first decompressed image based on the compressed target difference information, to obtain a second decompressed image.

According to the method provided in the second aspect, the second image device may receive the compressed image of the raw image and the compressed target difference information, and decompress the compressed image. Decompressing the compressed image of the raw image may be an inverse operation of compressing the raw image by a first device, to obtain the first decompressed image. In addition, the compressed target difference information is decompressed, so that the difference information that is between the decompressed image (namely, the first decompressed image) of the raw image and the raw image and that is included in the target difference information can be obtained. Therefore, the first decompressed image can be compensated for, to obtain the second decompressed image with higher precision and reduce a precision loss between the second decompressed image and the raw image.

In a possible implementation, the method further includes: receiving, from the first image device, a reference image corresponding to the raw image. In this embodiment of this application, the first image device compresses the raw image by using the reference image corresponding to the raw image. After receiving the reference image sent by the first image device, the second image device may perform an inverse operation of decompressing the first compressed image by using the reference image, to obtain the first decompressed image. In this way, image processing is performed based on the target difference information and the first decompressed image, to obtain the second decompressed image with higher precision, to reduce a precision loss between the second decompressed image and the raw image, and improve precision of the second decompressed image.

In a possible implementation, the decompressing the compressed image, to obtain the first decompressed image includes: decompressing, based on the reference image, the compressed image, to obtain the first decompressed image. In this embodiment of this application, the first image device compresses the raw image by using the reference image corresponding to the raw image, to obtain the compressed image; and the second image device may decompress the compressed image by using the reference image corresponding to the raw image of the compressed image, to obtain the first decompressed image. It may be understood that, for each compressed image, an image of a previous frame may be used as a reference image, decompression may be performed based on a reference image of each compressed image, to obtain a decompressed image, and then the decompressed image is restored by using target difference information, to obtain a second decompressed image with higher precision, and reduce a precision loss between the second decompressed image and a raw image.

In a possible implementation, both the target difference information and the first decompressed image include an image matrix, and each image matrix includes a plurality of image element values; and the performing image processing on the first decompressed image based on the compressed target difference information, to obtain a second decompressed image includes: decompressing the compressed target difference information, to obtain the target difference information; performing addition processing on the image matrix included in the first decompressed image and the image matrix included in the target difference information, to obtain an image matrix included in the second decompressed image; and determining the second decompressed image based on the image matrix included in the second decompressed image. In this embodiment of this application, the second image device may perform a matrix addition operation on the image matrix included in the target difference information and the image matrix included in the first decompressed image, to add the difference information between the first decompressed image and the raw image to the first decompressed image, to obtain the second decompressed image with higher precision, and reduce a precision loss between the restored second decompressed image and the raw image.

According to a third aspect, an embodiment of this application provides an image processing apparatus. The image processing apparatus has some or all functions of implementing the first image device according to the first aspect. For example, a function of the apparatus may include a function in some or all embodiments of the first image device in this application, or may include a function of separately implementing any one of embodiments of this application. The function may be implemented by hardware, or may be implemented by hardware executing corresponding software. The hardware or the software includes one or more units or modules corresponding to the function. The image processing apparatus may include: an obtaining unit, configured to obtain a compressed image of a raw image; a decompression unit, configured to decompress the compressed image, to obtain a first decompressed image; a determining unit, configured to determine target difference information, where the target difference information is obtained based on difference information between the raw image and the first decompressed image; a compression unit, configured to compress the target difference information, to obtain compressed target difference information; a sending unit, configured to send the compressed image and the compressed target difference information to a second image device.

In a possible implementation, both the difference information and the target difference information include an image matrix, and each image matrix includes a plurality of image element values. The determining unit is specifically configured to: change, to a preset value, an image element value that is in the image matrix included in the difference information and that falls within a preset threshold range, to obtain the image matrix included in the target difference information.

In a possible implementation, the obtaining unit is specifically configured to: receive the raw image from a photographing apparatus; obtain a reference image corresponding to the raw image; and compress the raw image based on the reference image, to obtain the compressed image.

In a possible implementation, the obtaining unit is specifically configured to: obtain the raw image through photographing; obtain a reference image corresponding to the raw image; and compress the raw image based on the reference image, to obtain the compressed image.

In a possible implementation, the sending unit is further configured to: send the reference image to the second image device.

According to a fourth aspect, an embodiment of this application provides an image processing apparatus. The image processing apparatus has some or all functions of implementing the second image device according to the second aspect. For example, a function of the apparatus may include a function in some or all embodiments of the second image device in this application, or may include a function of separately implementing any one of embodiments of this application. The function may be implemented by hardware, or may be implemented by hardware executing corresponding software. The hardware or the software includes one or more units or modules corresponding to the function. The image processing apparatus may include: a receiving unit, configured to receive, from a first image device, a compressed image of a raw image and compressed target difference information, where target difference information is obtained based on difference information between the raw image and a first decompressed image; a decompression unit, configured to decompress the compressed image, to obtain the first decompressed image; an image processing unit, configured to perform image processing on the first decompressed image based on the compressed target difference information, to obtain a second decompressed image.

In a possible implementation, the receiving unit is further configured to: receive, from the first image device, a reference image corresponding to the raw image.

In a possible implementation, the decompression unit is specifically configured to: decompress, based on the reference image, the compressed image, to obtain the first decompressed image.

In a possible implementation, both the target difference information and the first decompressed image include an image matrix, and each image matrix includes a plurality of image element values. The decompression unit is specifically configured to: decompress the compressed target difference information, to obtain the target difference information; perform addition processing on the image matrix included in the first decompressed image and the image matrix included in the target difference information, to obtain an image matrix included in the second decompressed image; and determine the second decompressed image based on the image matrix included in the second decompressed image.

According to a fifth aspect, an embodiment of this application provides a computer device. The computer device includes a processor, and the processor is configured to support the computer device in implementing a corresponding function in the image processing method provided in the first aspect. The computer device may further include a memory, and the memory is configured to be coupled with the processor, and stores program instructions and data that are necessary for the computer device. The computer device may further include a communication interface, which is used for communication between the computer device and another device or another communication network.

According to a sixth aspect, an embodiment of this application provides a computer device. The computer device includes a processor, and the processor is configured to support the computer device in implementing a corresponding function in the image processing method provided in the second aspect. The computer device may further include a memory, and the memory is configured to be coupled with the processor, and stores program instructions and data that are necessary for the computer device. The computer device may further include a communication interface, which is used for communication between the computer device and another device or another communication network.

According to a seventh aspect, an embodiment of this application provides a computer-readable storage medium, configured to store computer software instructions used by the first image device provided in the first aspect. The computer-readable storage medium includes a program designed for executing the first aspect.

According to an eighth aspect, an embodiment of this application provides a computer-readable storage medium, configured to store computer software instructions used by the second image device provided in the second aspect. The computer-readable storage medium includes a program designed for executing the second aspect.

According to a ninth aspect, an embodiment of this application provides a computer program, where the computer program includes instructions, and when the computer program is executed by a computer, the computer is enabled to perform the procedure performed by the first image device in the first aspect.

According to a tenth aspect, an embodiment of this application provides a computer program, where the computer program includes instructions, and when the computer program is executed by a computer, the computer is enabled to perform the procedure performed by the second image device in the second aspect.

According to an eleventh aspect, this application provides a chip system. The chip system includes a processor, configured to support a computer device in implementing a function in the first aspect, for example, generating or processing information in the image processing method in the first aspect. In a possible design, the chip system further includes a memory, and the memory is configured to store program instructions and data that are necessary for the first image device. The chip system may include a chip, or may include a chip and another discrete component.

According to a twelfth aspect, this application provides a chip system. The chip system includes a processor, configured to support a computer device in implementing a function in the second aspect, for example, generating or processing information in the image processing method in the second aspect. In a possible design, the chip system further includes a memory, and the memory is configured to store program instructions and data that are necessary for the second image device. The chip system may include a chip, or may include a chip and another discrete component.

### BRIEF DESCRIPTION OF DRAWINGS

FIG. 1 is a schematic diagram of an architecture of an image processing system according to an embodiment of this application;
FIG. 2 is a schematic diagram of an architecture of an image processing system in an industrial vision field according to an embodiment of this application;
FIG. 3 is a schematic flowchart of an image processing method according to an embodiment of this application;
FIG. 4 is a diagram of an application scenario in which an image processing method is applied to industrial vision according to an embodiment of this application;
FIG. 5a is a schematic diagram of an image precision loss between images after and before compression according to an embodiment of this application;
FIG. 5b is a schematic diagram of an image precision loss between images after and before compression according to an embodiment of this application;
FIG. 6 is a schematic timing diagram of an image processing method according to an embodiment of this application;
FIG. 7 is a schematic diagram of a structure of an image processing apparatus according to an embodiment of this application;
FIG. 8 is a schematic diagram of a structure of another image processing apparatus according to an embodiment of this application;
FIG. 9 is a schematic diagram of a structure of a computer device according to an embodiment of this application; and
FIG. 10 is a schematic diagram of a structure of another computer device according to an embodiment of this application.

### DESCRIPTION OF EMBODIMENTS

Some terms in this application are first described, to help persons skilled in the art have a better understanding.

### 1. Image matrix

An image matrix may also be described as a matrix or a matrix of an image. The image matrix is a matrix representation of the image. A row of the image matrix corresponds to a height of an image, and a column of the image matrix corresponds to a width of the image.

In this application, a first image device may perform a subtraction operation on two matrices: an image matrix included in a raw image and an image matrix included in a first decompressed image, to obtain difference information. A second image device may perform an addition operation on two matrices: the image matrix included in the first decompressed image and an image matrix included in target difference information, to obtain an image matrix included in a second decompressed image, so that the second decompressed image can be obtained based on the image matrix included in the second decompressed image.

### 2. Image element value

An image element value may also be described as an element value, an element value of an image, an element value of an image matrix, an element value of a matrix, an image element value of an image matrix, or a value of an image element. It may be understood that a quantity of image element values is the same as a quantity of pixels, and each image element value corresponds to one pixel in an image. A location of the image element value in an image matrix corresponds to a location of a pixel in the image, and the image element value is a grayscale value of the pixel.

In this application, that a first image device performs a subtraction operation on two matrices: an image matrix included in a raw image and an image matrix included in a first decompressed image, to obtain difference information is specifically: performing a subtraction operation on each image element value in the image matrix included in the raw image and an image element value in a corresponding matrix in the image matrix included in the first decompressed image, to obtain an image matrix included in the difference information.

### 3. Video coding

Video coding may also be described as video compression. A video includes consecutive image frames. Due to a persistence of vision effect of human eyes, when an image frame sequence is played at a specific rate, a video with continuous actions can be viewed. To store and transmit a video more conveniently, the video may be coded. Because a similarity between consecutive image frames in the video is extremely high, video coding is usually to remove space redundancy and time redundancy in the video. Common video coding standards include advanced video coding (advanced video coding, H.264/AVC), high efficiency video coding (high efficiency video coding, HEVC/H.265), and the like.

In this application, a first image device may obtain a raw image photographed by a photographing apparatus, and compress the raw image in a video coding manner, to obtain a compressed image of the raw image. For ease of description, in this application, the H.264 compression technology is used as an example for description.

The H.264 compression technology mainly uses intra prediction to reduce space domain data redundancy, uses inter prediction (motion estimation and compensation) to reduce time domain data redundancy, uses conversion and quantization to compress residual data, and uses coding to reduce a residual and redundancy in motion vector transmission and signal transmission. Image compression performed by using the H.264 compression technology mainly includes the following parts: block division, frame grouping, inter prediction, intra prediction, discrete cosine transform, and coding compression.

Specifically, the block division may include macroblock division and sub-block division. An area with a size of 16×16 or 8×8 in an image is used as a macroblock. The sub-block division may refer to dividing the area, which is used as the macroblock, into smaller sub-blocks. The macroblock division and the sub-block division may be used for subsequent prediction and compression.

Frame grouping is to group closely related image frames into a group of pictures (group of pictures, GOP) (one image sequence). The image sequence includes three types of image frames: an intra-coded frame (I-frame intra picture), a forward predictive coded frame (P-frame predictive-frame), and a bi-directional interpolated prediction frame (B-frame bi-directional interpolated prediction frame).

An I-frame may retain a complete image during compression, and does not need to be generated with reference to another image frame. It may be understood that an I-frame includes a large amount of image information, and may be used as a reference image frame of a subsequent P-frame and B-frame. A P-frame is a coded image for compressing an amount of transmitted data by using time redundancy information of an image frame that has been coded in an image sequence. The P-frame indicates a difference between the image frame and a previous I-frame (or a P-frame). During decoding, a buffered image (the I-frame) needs to be superimposed with the difference defined by the current frame, to generate a final image. It may be understood that the P-frame does not have complete image data, but has only data of a difference from an image of a previous frame. During decoding, reference needs to be made to a previous I-frame (or a P-frame), and the decoding cannot be performed dependently. Because the P-frame is transmitted based on a difference, a compression ratio of the P-frame is high. A B-frame is a coded image for compressing an amount of transmitted data by considering both a coded image frame in an image sequence and time redundancy information of a coded image frame following the image sequence. It may be understood that, to decode the B-frame, an image frame buffered image before the image frame needs to be obtained, and a decoded image frame image also needs to be obtained. A final decoded image is obtained by superimposing the previous and next images with data of the current frame.

Inter prediction indicates that, in an image sequence, by using an image difference between two consecutive image frames, which may be an image difference between a P-frame and a previous I-frame, a same part is removed, and only a different part is stored as data for compression. Intra prediction indicates that compression is performed based on a current image frame, and the intra prediction is irrelevant to adjacent previous and next image frames. An intra prediction result is obtained by predicting a current pixel by using an adjacent coded pixel in a same frame of image and by using a feature that chroma values of adjacent pixels in an image do not change abruptly. The H.264 compression technology includes nine intra prediction modes, and a prediction mode and a difference obtained by subtracting an intra prediction image from a raw image may be stored, so that the raw image can be restored during decoding.

Discrete cosine transform (discrete cosine transform, DCT) can be used to perform integer DCT on an obtained difference, remove correlation between data, and further compress the data.

Coding compression indicates that lossless compression on data can be performed and the coding compression is generally located at an end of video compression. Lossless entropy coding may be performed according to an information entropy principle. Entropy coding converts a series of element symbols used to represent a video sequence into a compressed data stream used for transmission or storage. An input symbol may include a quantized transform coefficient, motion vector information, prediction mode information, or the like. Entropy coding can effectively remove statistical redundancy of these video element symbols, and is one of important tools to ensure compression efficiency of video coding. In H.264, coding compression may be performed by using context-based adaptive binary arithmetic coding (context-based adaptive binary arithmetic coding, CABAC).

The following describes embodiments of this application with reference to the accompanying drawings in embodiments of this application.

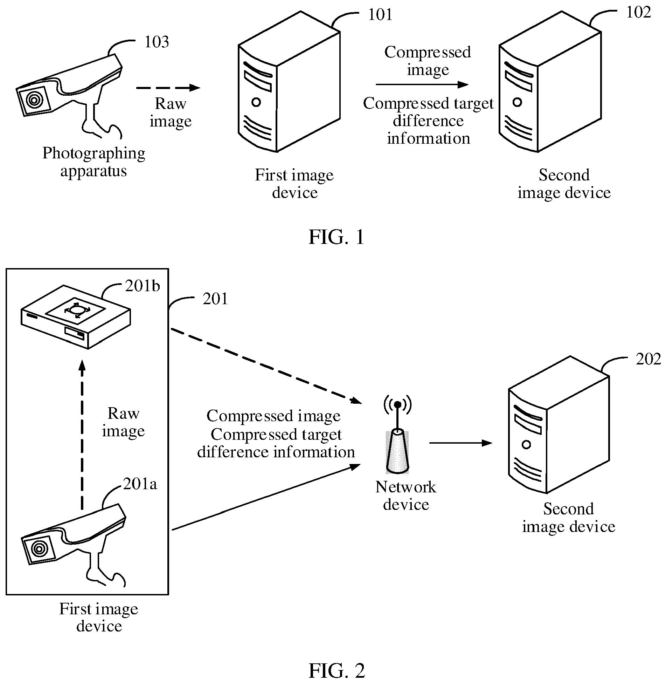

To facilitate understanding of embodiments of this application, the following first describes an architecture of an image processing system on which embodiments of this application are based. FIG. 1 is a schematic diagram of an architecture of an image processing system according to an embodiment of this application. The architecture of the image processing system in this application may include a first image device 101 and a second image device 102 in FIG. 1. The first image device 101 and the second image device 102 may communicate with each other by using a network. The first image device 101 and the second image device 102 may be separately deployed in any computer device related to image processing. For example, the first image device 101 and the second image device 102 may be separately deployed in one or more computing devices (for example, a central server) in a cloud environment, or one or more computing devices (an edge computing device) in an edge environment. The edge computing device may be a server. The cloud environment is a central computing device cluster that is owned by a cloud service provider and that is configured to provide a computing, storage, and communication resource. In the cloud environment, there are many storage resources and computing resources. The edge environment is an edge computing device cluster that is geographically close to a raw data collection device and that is used to provide a computing, storage, and communication resource. Alternatively, a target tracking system in this application may be deployed in one or more terminal devices. For example, the target tracking system may be deployed in one terminal device. The terminal device has a specific computing, storage, and communication resource, and may be a computer, an in-vehicle terminal, a mobile phone, a tablet computer, a notebook computer, a palmtop computer, a mobile internet device (mobile internet device, MID), a gateway, or the like.

Specifically, the first image device 101 may decompress a compressed image of a raw image, obtain target difference information between the raw image and a first compressed image obtained through decompression, compress the target difference information, and send the raw image and a compressed target difference information to the second image device 102. The second image device 102 decompresses the received compressed image and the compressed target difference information, to obtain the target difference information and a first decompressed image, and compensates for the first decompressed image by using the target difference information obtained through decompression, so that a second decompressed image with higher precision can be obtained.

As shown in FIG. 1, the image processing system may further include a photographing apparatus 103, and the photographing apparatus 103 may communicate with the first image device 101 by using a network. The first image device may receive a raw image photographed by the photographing apparatus 103, and compress the raw image, to obtain a compressed image of the raw image. It should be noted that the photographing apparatus 103 may be deployed in the first image device 101, or may be deployed outside the first image device 101. The photographing apparatus 103 may include but is not limited to a camera, an infrared camera, a laser radar, and the like.

It may be understood that the architecture of the image processing system in FIG. 1 is merely an example implementation in embodiments of this application. The architecture of the image processing system in embodiments of this application includes but is not limited to the foregoing architecture of the image processing system.

According to the image processing method provided in embodiments of this application, an loss error between images after and before compression can be tracked and reduced. The image processing method described in this application may be used in many fields such as self driving, augmented reality (augmented reality, AR), industrial vision, and medical image processing, to implement a specific function.

For example, the image processing system in this application may be used in the industrial vision field.

The industrial visual field refers to adding a visual system to an industrial automatic production line, simulating a human visual function by capturing an image, extracting information, and processing the information, for detecting, measuring, and controlling a workpiece on the industrial automatic production line, to improve production quality and production by replacing manual inspection. For example, an image of a workpiece on a conveyor belt on a pipeline in a factory may be obtained, and the workpiece in the image is identified and analyzed. An unqualified workpiece on the conveyor belt may be detected, to generate control instructions. The control instructions may be used to control, by using a programmable logic controller (programmable logic controller, PLC), a mechanical arm to move the unqualified workpiece out of the conveyor belt. However, current image processing in an industrial field is based on a compression algorithm in a joint photographic experts group (joint photographic experts group, JPEG) format. A quantization table in this compression algorithm is designed based on human eye perception. Because human eyes are less sensitive to a high-frequency part than to a low-frequency part, an image obtained through compression has an unexpected precision loss compared with a raw image. In addition, the high-frequency part includes, to some extent, features such as a corner point, an edge, and a line that need to be extracted for subsequent image recognition and analysis. This causes a recognition precision difference and affects an analysis result.

In this case, based on a compressed image, difference information between a raw image and an image obtained by decompressing the compressed image may be determined, so that after the decompressed image is obtained, precision lost in a compression process may be compensated by using the difference information. In addition, compression of the difference information can also ensure that an amount of transmitted data is reduced and a transmission latency is reduced while precision of the decompressed image is improved. FIG. 2 is a schematic diagram of an architecture of an image processing system in an industrial vision field according to an embodiment of this application. As shown in FIG. 2, the architecture of the image processing system in this application may include a first image device 201 and a second image device 202. A photographing apparatus 201a and an industrial gateway 201b may be deployed in the first image device 201. The photographing apparatus 201a may be an industrial camera, and the second image device 202 may be a mobile edge computing (mobile edge computing, MEC) server. The first image device 201 may establish a wired or wireless communication connection to the second image device 202. In the first image device 201, the photographing apparatus 201a and the industrial gateway 201b may also have a wired or wireless communication connection. The foregoing communication connection manner may include but is not limited to wireless fidelity (wireless fidelity, Wi-Fi), Bluetooth, near field communication (near field communication, NFC), and the like. When the photographing apparatus 201a in the first image device 201 establishes a wireless communication connection to the industrial gateway 201b or the first image device 201 establishes a wireless communication connection to the second image device 202, the image processing system provided in this embodiment of this application may further include a network device. The network device may be an access network device, a base station, a wireless access point (wireless access point, AP), or the like. Used in a 5G field, the photographing apparatus 201a and the industrial gateway 201b may perform high-speed image transmission by using the GigE Vision protocol and through a gigabit Ethernet interface.

In a possible implementation, the photographing apparatus 201a may capture a raw image of a target object (for example, a workpiece on a conveyor belt on a pipeline), and send the raw image to the industrial gateway 201b. The industrial gateway 201b may be configured to: compress the obtained raw image, to obtain a first compressed image; decompress the first compressed image, to obtain a first decompressed image; obtain target difference information based on difference information between the raw image and the first decompressed image; compress the target difference information, to obtain compressed target difference information; and send the compressed image and the compressed target difference information to a MEC server (namely, the second image device 202). Further, when the industrial gateway 201b wirelessly transmits the compressed image and the compressed target difference information, the compressed image and the compressed target difference information may be forwarded to a user plane function (user plane function, UPF) by using a base station, and the UPF forwards the compressed image and the compressed target difference information to the edge computing server MEC server.

In a possible implementation, the photographing apparatus 201a in the image processing system may capture a raw image of a target object, and directly compress the raw image, to obtain a compressed image; further, decompress the compressed image, to obtain a first decompressed image; then obtain target difference information based on difference information between the raw image and the first decompressed image; and compress the target difference information, to obtain compressed target difference information. The photographing apparatus 201a forwards the compressed image and the compressed target difference to a UPF by using a base station, and then sends the compressed image and the compressed target difference information to a MEC server by using the UPF.

The edge computing server receives the compressed image and the compressed target difference information, decompresses the compressed image and the compressed target difference information, to obtain the first decompressed image and the target difference information, and then performs image processing on the first decompressed image by using the target difference information, to obtain a second decompressed image. Further, the second decompressed image may be identified, analyzed, and processed, to obtain a result, and control instructions are triggered by using the result. For example, the control instructions generated by the edge computing server may be instructions for identifying an unqualified workpiece, or may be instructions for identifying an unqualified workpiece and reporting the unqualified workpiece to a management application, or the like.

It may be understood that the architecture of the image processing system in FIG. 2 is merely an example implementation in embodiments of this application. The architecture of the image processing system in embodiments of this application includes but is not limited to the foregoing architecture of the image processing system.

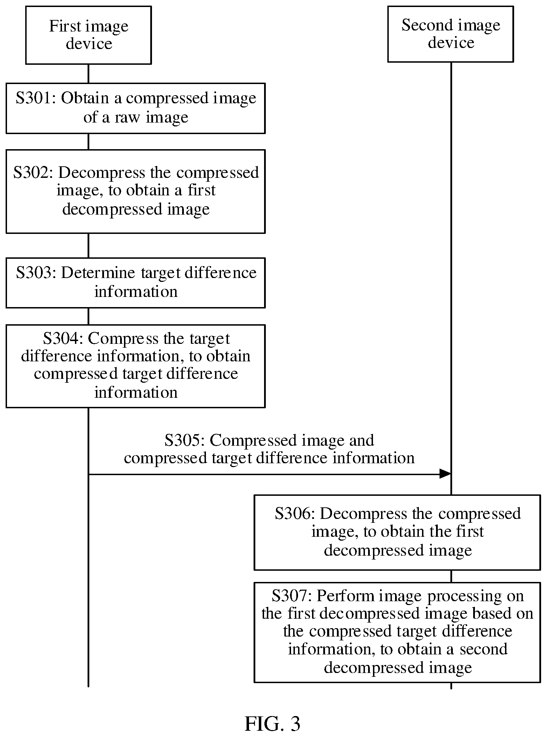

Based on the architecture of the image processing system provided in FIG. 1 and the architecture of the another image processing system provided in FIG. 2, and with reference to the image processing method provided in this application, the technical problem proposed in this application is specifically analyzed and resolved. FIG. 3 is a schematic flowchart of an image processing method according to an embodiment of this application. The method may be used in the architecture of the foregoing image processing system in FIG. 1 or FIG. 2. The first image device in FIG. 1 or FIG. 2 may be configured to support and perform step S301 to step S305 in the method procedure shown in FIG. 3, and the second image device in FIG. 1 or FIG. 2 may be configured to support and perform step S306 and step S307 in the method procedure shown in FIG. 3. The method may include the following steps S301 to S307.

Step S301: A first image device obtains a compressed image of a raw image.

Specifically, the first image device may obtain the raw image sent by a photographing apparatus, and compress the raw image, to obtain a compressed image of the raw image. If the first image device includes the photographing apparatus, the first image device may also photograph a target object, to obtain the raw image. Further, the first image device compresses the raw image, to obtain the compressed image of the raw image.

An image compression method may be used for compression. A hardware encoder may be built in the first image device, and the raw image may be compressed by using compression technologies such as H.264, H.265, and JPEG. Workpieces photographed by a camera on a pipeline are greatly similar. Therefore, to be better used in an industrial field, in the compression method in this embodiment of this application, a video compression solution may be further used for compression. For example, the raw image in this application may be compressed by using advanced video coding (advanced video coding, AVC/H.264), or the raw image in this application may be compressed by using high efficiency video coding (high efficiency video coding, HEVC/H.265). This is not limited herein.

It should be noted that, in a process of compressing an image by using the H.264 or H.265 compression algorithm, a plurality of frames of images are grouped into one group of pictures GOP, and the group of pictures includes an I-frame, a P-frame, and a B-frame. In this embodiment of this application, one GOP may include one I-frame and a plurality of P-frames. During compression on a 1^{st} frame of raw image, a preset reference image may be obtained, the preset reference image is used as an I-frame, and the 1^{st} frame of raw image is used as a P-frame for compression. By analogy, a plurality of subsequent frames of images each may be compressed by using a previous frame of image of the frame of image as a reference image, to obtain a compressed image of a multi-frame original image.

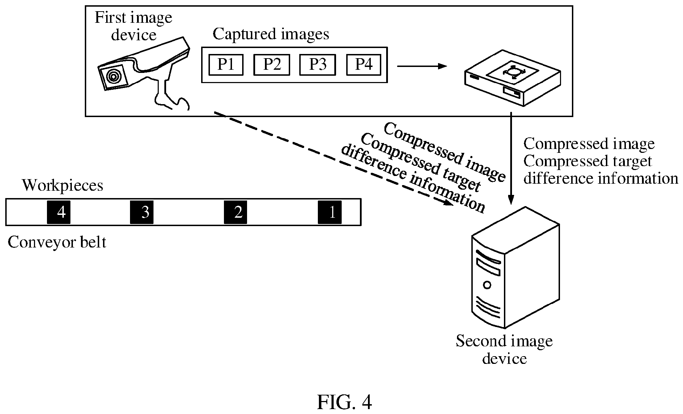

For example, the method may be used in an industrial vision field. Refer to FIG. 4 together. FIG. 4 is a diagram of an application scenario in which an image processing method is used in industrial vision according to an embodiment of this application. As shown in FIG. 4, when the method is used in the industrial field, a workpiece is transferred on a conveyor belt, for example, four workpieces shown in FIG. 4. The first image device may include a photographing apparatus and an industrial gateway. The photographing apparatus may photograph the workpiece on the conveyor belt, to obtain a multi-frame original image, and compress the raw image, to obtain a compressed image of the raw image. Alternatively, the raw image photographed by the photographing apparatus may be sent to the industrial gateway in the first image device, and the industrial gateway compresses the raw image, to obtain a compressed image of the raw image. As shown in FIG. 4, a 1^{st} frame of raw image of the raw image photographed by the photographing apparatus is P1. The 1^{st} frame of raw image P1 is compressed with reference to a locally stored reference image from cloud, to obtain a compressed image of the 1^{st} frame of raw image P1. Further, the 1^{st} frame of raw image P1 may be used as a reference image corresponding to a 2^{nd} frame of raw image P2 for compression, to obtain a compressed image of the 2^{nd} frame of raw image P2; and the 2^{nd} frame of raw image P2 may be used as a reference image corresponding to a 3^{rd} frame of raw image P3 for compression, to obtain a compressed image of the 3^{rd} frame of raw image P3, until a compressed image of each frame of raw image is obtained.

Step S302: The first image device decompresses the compressed image, to obtain a first decompressed image.

Specifically, the first image device may decompress the compressed image based on an inverse operation of compression, to obtain the first decompressed image. The H.264 compression method is used as an example. Decompression may be separately performed on entropy coding, and decompression may be separately performed on intra prediction and inter prediction, to obtain the first decompressed image of the raw image. For example, decoding processing is performed by using a decoding method corresponding to the entropy coding. Further, decompression is performed on inter-frame compression and intra-frame compression. Decompression may be performed on the intra-frame compression by using stored prediction mode information, and decompression may be performed on the inter-frame compression by using a reference image corresponding to each frame of image, to obtain the first decompressed image. The first decompressed image is stored for subsequent processing.

Step S303: The first image device determines target difference information, where the target difference information is obtained based on difference information between the raw image and the first decompressed image.

Specifically, the compression performed on the raw image in this application by using H.264 is lossy compression. To obtain a larger compression ratio, some information is lost during the compression. Therefore, to improve precision of the decompressed image at a second image device, in this application, after decompression, the target difference information is determined by using the raw image and the first decompressed image, and the determined target difference information is compressed and sent to the second image device, so that the second image device can perform image processing on the image based on the target difference information after decompressing the image, to obtain a decompressed image with higher precision.

In a possible implementation, both the raw image and the first decompressed image include one image matrix. It may be understood that image sizes of the raw image and the first decompressed image are the same, widths and heights of image matrices of the raw image and the first decompressed image are also the same, and each image element value included in the image matrix included in the raw image is in a one-to-one correspondence with each image element value included in the image matrix included in the first decompressed image. The image matrix included in the raw image is subtracted from the image matrix included in the first decompressed image, to be specific, each image element in the matrix included in the raw image is subtracted from each image element value at a corresponding location in the matrix included in the first decompressed image, to obtain an image matrix included in the difference information. An operation of performing the subtraction operation may be performed by the first image device by invoking a software program.

Further, to reduce transmitted data, mitigation processing is performed on the difference information, to obtain the target difference information. To be specific, each image element value in the image matrix included in the obtained difference information is compared with a preset threshold range, and when it is determined that the image element value falls within the preset threshold range, the image element value is changed to a preset value, to obtain an image matrix included in the target difference information. The preset threshold range may be manually set, or may be preset by the first image device, or may be adjusted based on different application scenarios. It may be understood that different preset threshold ranges may affect compression precision of the image processing method used in this application, so that the compression precision can be controlled. In this embodiment of this application, the preset value may be 0, 1, or the like. This is not limited herein.

In a possible implementation, when many image element values in the image matrix included in the raw image and the image matrix included in the first decompressed image are the same, and many image element values in the image matrix included in the difference information obtained through a subtraction operation is performed between the image matrix included in the raw image and the image matrix included in the first decompressed image are 0, the preset value may be determined as 0, to compress the target difference information. Statistics may be collected on a value with a largest quantity of same image element values in the image matrix included in the difference information and the largest quantity, and the value with the largest quantity of same image element values is used as the preset value, to obtain the target difference information.

In the target difference information, a part that has a large difference between image element values in the image matrices of the raw image and the first decompressed image is retained, and a part that has a small difference between image element values in the image matrices of the raw image and the first decompressed image is mitigated. Therefore, after the target difference information is sent to the second image device, the decompressed image may be processed by using the target difference information. The part that has a large difference from the image matrix in the raw image is supplemented back to the image obtained through decompression, to improve precision of the decompressed image. A data amount of the part that has a small difference from the image element value in the image matrix in the raw image is mitigated, to reduce a transmitted data amount.

Step S304: The first image device compresses the target difference information, to obtain compressed target difference information.

In a possible implementation, to reduce a transmitted data amount, the first image device may compress the target difference information. Specifically, the target difference information may be coded, to obtain the compressed target difference information, and entropy coding may be performed on the target difference information, to obtain the compressed target difference information. An entropy coding method may be Shannon (Shannon) coding, or may be Huffman (Huffman) coding, arithmetic coding (arithmetic coding), or the like. An entropy coding manner is not limited herein. It may be understood that an amount of information is not lost before and after the target difference information is coded. After the compressed target difference information is sent to the second image device, the second image device decompresses the compressed target difference information, so that lossless target difference information can be obtained.

Step S305: The first image device sends the compressed image and the compressed target difference information to the second image device.

The first image device sends the compressed image and the compressed target difference information to the second image device, so that the second image device decompresses the compressed image and the compressed target difference information, and further processes a decompressed image by using the target difference information, to improve image precision.

For example, as shown in FIG. 4, the first image device (for example, the photographing apparatus and the industrial gateway in FIG. 4) sends the compressed image and the compressed target difference information to a MEC server. After receiving the compressed image and the compressed target difference information, the MEC server decompresses the compressed image and the compressed target difference information.

Step S306: The second image device decompresses the compressed image, to obtain the first decompressed image.

In a possible implementation, the second image device includes a hardware decoder that may be configured to decompress the received compressed image, to obtain the first decompressed image. Specifically, an inverse operation may be performed based on a video coding sequence, to obtain the first decompressed image of the raw image. Further, the second image device stores the first decompressed image for subsequent processing.

Step S307: The second image device performs image processing on the first decompressed image based on the compressed target difference information, to obtain a second decompressed image.

In a possible implementation, the second image device may invoke a software program, to perform a matrix addition operation on the image matrix included in the target difference information and the image matrix in the first decompressed image, to obtain an image matrix included in the second decompressed image. To be specific, each image element value in the image matrix in the target difference information is added to each image element value at a corresponding location in the image matrix in the first decompressed image, to obtain an image element value in the image matrix included in the second decompressed image. Further, a pixel value of each pixel in the second decompressed image may be obtained based on the image matrix included in the second decompressed image, to obtain the second decompressed image. As shown in FIG. 4, the MEC server may decompress and restore the received image, to obtain the second decompressed image. Further, the second decompressed image is identified and analyzed, to generate control instructions.

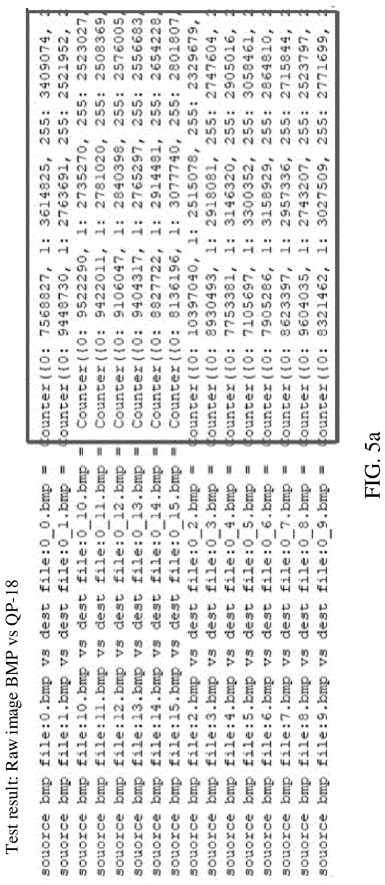

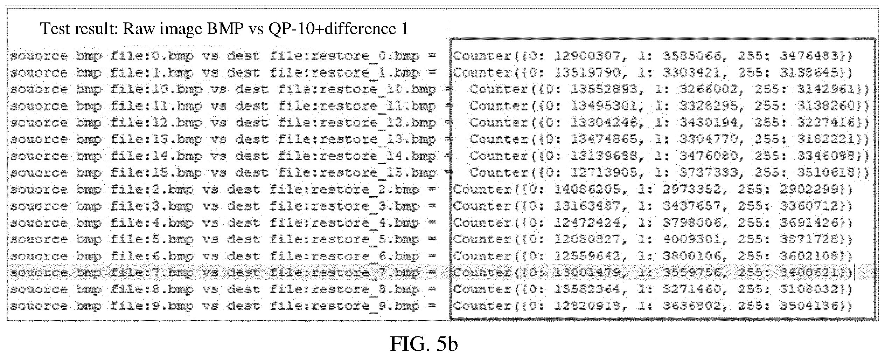

Refer to FIG. 5a and FIG. 5b together. FIG. 5a and FIG. 5b each are a schematic diagram of an image precision loss between images after and before compression according to an embodiment of this application. FIG. 5a is a schematic diagram of a result obtained by performing a subtraction operation on an image matrix included in a raw image and an image matrix included in a first decompressed image without using the image processing method provided in this embodiment of this application. FIG. 5b is a schematic diagram of a result obtained by performing a subtraction operation on an image matrix included in a raw image and an image matrix included in a second decompressed image by using the image processing method provided in this embodiment of this application.

As shown in FIG. 5a and FIG. 5b, 0, 1, and 255 in black boxes respectively indicate that differences between grayscale values and grayscale values of pixels in same locations of the raw image are 0, 1, and 255. It should be noted that 0 indicates that there is no difference between a grayscale value of an image obtained through processing and a grayscale value of the raw image, 1 and 255 indicate that a difference between a grayscale value of the second decompressed image obtained through processing and the grayscale value of the raw image is ±1, and so on. Numbers after 0, 1, and 255 indicate quantities of pixels. For example, "0: 7568827" in the 1^{st} row of FIG. 5a indicates that a quantity of pixels whose grayscale values are the same between the first decompressed image and the raw image is 7568827. Similarly, "0: 12900307" in the 1^{st} row of FIG 5b also indicates that a quantity of pixels whose grayscale values are the same between the second decompressed image and the raw image is 12900307. In comparison with a result shown in FIG. 5a, implementing the image processing method provided in this application can increase a quantity of pixels whose difference between grayscale values and grayscale values of pixels at a same location of the raw image is 0, in other words, can increase a quantity of pixels whose grayscale values of the second decompressed image obtained through decompression remain unchanged relative to the raw image. Therefore, precision of the compressed image after decompression can be improved, and a precision loss error between an image restored by the second image device and the raw image can be reduced.

In this embodiment of this application, the compressed image is decompressed based on the original compressed image, and the target difference information is determined based on the difference information between the raw image and the decompressed first decompressed image. After the compressed image is sent to the second image device, the target difference information between the first decompressed image obtained after the compressed image is decompressed and the raw image is further sent. A compression precision loss between the raw image and the image obtained through compression and then decompression can be determined by using the target difference information, so that the second image device decompresses the image after the second image device decompresses the image. Then, the target difference information is compressed and then sent to the second image device, so that the second image device performs image processing on the image. The decompressed image (namely, the second decompressed image) with higher precision may be obtained based on the target difference information and the image (namely, the first decompressed image) obtained through decompression, to reduce a precision loss between the decompressed image and the raw image, and improve precision of the second decompressed image.

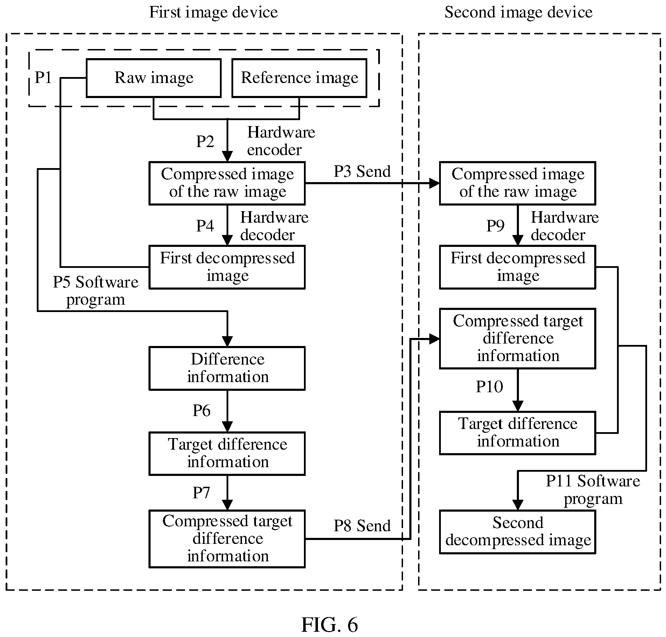

FIG. 6 is a schematic timing diagram of an image processing method according to an embodiment of this application. As shown in FIG. 6: P1: A first image device obtains a raw image and a reference image. P2: The first image device compresses the raw image by using a built-in hardware encoder, to obtain a compressed image of the raw image. P3: The first image device may send the compressed image of the raw image to a second image device. P4: The hardware decoder in the first image device may decompress the compressed image of the raw image, to obtain a first decompressed image. P5: The first image device invokes a software program to perform subtraction processing on an image matrix included in the raw image and an image matrix included in the first decompressed image, to obtain difference information. P6: The first image device changes, to a preset value, an image element value that is in the image matrix included in the difference information and that falls within a preset threshold range, to obtain target difference information. P7: The first image device encodes the target difference information, to obtain compressed target difference information. P8: The first image device sends the compressed target difference information to the second image device. The second image device receives the compressed image of the raw image and the compressed target difference information. P9: The second image device may decompress the compressed image of the raw image by using a built-in hardware decoder, to obtain the first decompressed image. P10: The second image device decompresses the compressed target difference information, to obtain the target difference information. P11: The second image device performs image processing on the first decompressed image based on the target difference information, to obtain a second decompressed image.

P3 may be performed before P8 is performed, P3 may be performed after P8 is performed, or P3 and P8 may be performed at the same time. This is not limited herein.

In this embodiment of this application, the compressed image is decompressed based on the original compressed image, and the target difference information is determined based on the difference information between the raw image and the decompressed first decompressed image. After the compressed image is sent to the second image device, the target difference information between the first decompressed image obtained after the compressed image is decompressed and the raw image is further sent. A compression precision loss between the raw image and the image obtained through compression and then decompression can be determined by using the target difference information, so that the second image device decompresses the image after the second image device decompresses the image. Then, the target difference information is compressed and then sent to the second image device, so that the second image device restores an image. Therefore, a precision loss error between the restored image and the raw image can be reduced, and precision of the restored image can be improved.

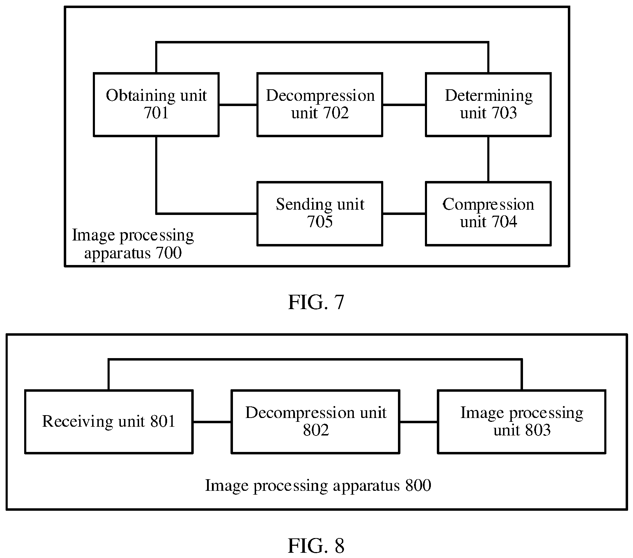

FIG. 7 is a schematic diagram of a structure of an image processing apparatus according to an embodiment of this application. The image processing apparatus 700 may include an obtaining unit 701, a decompression unit 702, a determining unit 703, a compression unit 704, and a sending unit 705. Detailed descriptions of the units are as follows:

The image processing apparatus has a function of implementing the first image device described in embodiments of this application. For example, the image processing apparatus includes modules, units, or means (means) corresponding to the steps of the first image device described in embodiments of this application performed by the computer device. The functions, units, or means (means) may be implemented by software, may be implemented by hardware, may be implemented by hardware executing corresponding software, or may be implemented by a combination of software and hardware. For details, refer to the corresponding descriptions in the foregoing corresponding method embodiment.

The obtaining unit 701 is configured to obtain a compressed image of a raw image. The decompression unit 702 is configured to decompress the compressed image, to obtain a first decompressed image. The determining unit 703 is configured to determine target difference information, where the target difference information is obtained based on difference information between the raw image and the first decompressed image. The compression unit 704 is configured to compress the target difference information, to obtain compressed target difference information. The sending unit 705 is configured to send the compressed image and the compressed target difference information to a second image device.

In a possible implementation, both the difference information and the target difference information include an image matrix, and each image matrix includes a plurality of image element values. The determining unit 703 is specifically configured to: change, to a preset value, an image element value that is in the image matrix included in the difference information and that falls within a preset threshold range, to obtain the image matrix included in the target difference information.

In a possible implementation, the obtaining unit 701 is specifically configured to: receive the raw image from a photographing apparatus; obtain a reference image corresponding to the raw image; and compress the raw image based on the reference image, to obtain the compressed image.

In a possible implementation, the obtaining unit 701 is specifically configured to: obtain the raw image through photographing; obtain a reference image corresponding to the raw image; and compress the raw image based on the reference image, to obtain the compressed image.

In a possible implementation, the sending unit 705 is further configured to: send the reference image to the second image device.

It should be noted that, for functions of the functional units in the image processing apparatus 700 described in this embodiment of this application, refer to related descriptions of step S301 to step S305 in the foregoing method embodiment in FIG. 3. Details are not described herein again.

FIG. 8 is a schematic diagram of a structure of another image processing apparatus according to an embodiment of this application. The image processing apparatus 800 may include a receiving unit 801, a decompression unit 802, and an image processing unit 803. Detailed descriptions of the units are as follows.

The image processing apparatus has a function of implementing the second image device described in embodiments of this application. For example, the image processing apparatus includes modules, units, or means (means) corresponding to the steps of the second image device described in embodiments of this application performed by the computer device. The functions, units, or means (means) may be implemented by software, may be implemented by hardware, may be implemented by hardware executing corresponding software, or may be implemented by a combination of software and hardware. For details, refer to the corresponding descriptions in the foregoing corresponding method embodiment.

The receiving unit 801 is configured to receive, from a first image device, a compressed image of a raw image and compressed target difference information, where target difference information is obtained based on difference information between the raw image and a first decompressed image. The decompression unit 802 is configured to decompress the compressed image, to obtain the first decompressed image. The image processing unit 803 is configured to perform image processing on the first decompressed image based on the compressed target difference information, to obtain a second decompressed image.

In a possible implementation, the receiving unit 801 is further configured to: receive, from the first image device, a reference image corresponding to the raw image.

In a possible implementation, the decompression unit 802 is specifically configured to: decompress, based on the reference image, the compressed image, to obtain the first decompressed image.

In a possible implementation, both the target difference information and the first decompressed image include an image matrix, and each image matrix includes a plurality of image element values. The decompression unit 802 is specifically configured to: decompress the compressed target difference information, to obtain the target difference information; perform addition processing on the image matrix included in the first decompressed image and the image matrix included in the target difference information, to obtain an image matrix included in the second decompressed image; and determine the second decompressed image based on the image matrix included in the second decompressed image.

It should be noted that, for functions of the functional units in the image processing apparatus 800 described in this embodiment of this application, refer to related descriptions of step S306 and step S307 in the foregoing method embodiment in FIG. 3. Details are not described herein again.

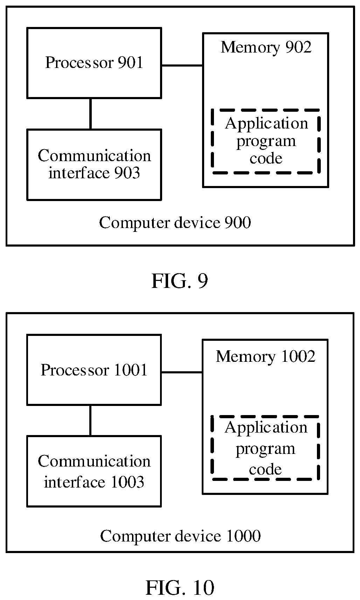

As shown in FIG. 9, FIG. 9 is a schematic diagram of a structure of a computer device according to an embodiment of this application. The computer device 900 has a function of implementing the first image device described in embodiments of this application. The computer device 900 includes at least one processor 901, at least one memory 902, and at least one communication interface 903. In addition, the device may further include a general-purpose component such as an antenna. Details are not described herein again.

The processor 901 may be a general-purpose central processing unit (CPU), a microprocessor, an application-specific integrated circuit (application-specific integrated circuit, ASIC), or one or more integrated circuits configured to control program execution of the foregoing solution.

The communication interface 903 is configured to communicate with another device or communication network such as an Ethernet, a radio access network (RAN), a core network, or a wireless local area network (wireless local area network, WLAN).

The memory 902 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, the memory is not limited thereto. The memory may exist independently, and is connected to the processor through a bus. The memory may alternatively be integrated with the processor.

The memory 902 is configured to store application program code used to execute the foregoing solution, and the processor 901 controls the execution. The processor 901 is configured to execute the application program code stored in the memory 902.

The code stored in the memory 902 may perform the image processing method provided in FIG. 3, for example, obtain a compressed image of a raw image; decompress the compressed image, to obtain a first decompressed image; determine target difference information, where the target difference information is obtained based on difference information between the raw image and the first decompressed image; compress the target difference information, to obtain compressed target difference information; and send the compressed image and the compressed target difference information to a second image device.

It should be noted that, for functions of the functional units in the computer device 900 described in this embodiment of this application, refer to related descriptions of step S301 to step S305 in the foregoing method embodiment in FIG. 3. Details are not described herein again.

In the foregoing embodiments, the description of each embodiment has respective focuses. For a part that is not described in detail in an embodiment, refer to related descriptions in other embodiments.

As shown in FIG. 10, FIG. 10 is a schematic diagram of a structure of another computer device according to an embodiment of this application. The device 1000 has a function of implementing the second image device described in embodiments of this application. The computer device 1000 includes at least one processor 1001, at least one memory 1002, and at least one communication interface 1003. In addition, the device may further include a general-purpose component such as an antenna. Details are not described herein again.

The processor 1001 may be a general-purpose central processing unit (CPU), a microprocessor, an application-specific integrated circuit (application-specific integrated circuit, ASIC), or one or more integrated circuits configured to control program execution of the foregoing solution.

The communication interface 1003 is configured to communicate with another device or communication network such as an Ethernet, a radio access network (RAN), a core network, or a wireless local area network (Wireless Local Area Network, WLAN).

The memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, the memory is not limited thereto. The memory may exist independently, and is connected to the processor through the bus. The memory may alternatively be integrated with the processor.

The memory 1002 is configured to store application program code used to execute the foregoing solution, and the processor 1001 controls the execution. The processor 1001 is configured to execute the application program code stored in the memory 1002.

The code stored in the memory 1002 may perform the image processing method provided in FIG. 3, for example, receive, from a first image device, a compressed image of a raw image and compressed target difference information, where target difference information is obtained based on difference information between the raw image and a first decompressed image; decompress the compressed image, to obtain the first decompressed image; and perform image processing on the first decompressed image based on the compressed target difference information, to obtain a second decompressed image.

It should be noted that, for functions of the functional units in the computer device 1000 described in this embodiment of this application, refer to related descriptions of step S306 and step S307 in the foregoing method embodiment in FIG. 3. Details are not described herein again.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual needs to achieve the objective of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device, and may be specifically a processor in the computer device) to perform all or some of the steps of the methods described in embodiments of this application. The foregoing storage medium may include any medium that can store program code, such as a USB flash drive, a removable hard disk, a magnetic disk, an optical disc, a read-only memory (read-only memory, ROM), or a random access memory (random access memory, RAM).

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terms such as a "component", a "module", and a "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An image processing method, wherein the method is applied to a first image device and comprises:
obtaining a compressed image of a raw image;
decompressing the compressed image, to obtain a first decompressed image;
determining target difference information, wherein the target difference information is obtained based on difference information between the raw image and the first decompressed image;
compressing the target difference information, to obtain compressed target difference information; and
sending the compressed image and the compressed target difference information to a second image device.

2. The method according to claim 1, wherein both the difference information and the target difference information comprise an image matrix, and each image matrix comprises a plurality of image element values; and
the determining target difference information comprises:
changing, to a preset value, an image element value that falls within a preset threshold range and that is in the image matrix comprised in the difference information, to obtain the image matrix comprised in the target difference information.

3. The method according to claim 1 or 2, wherein the obtaining a compressed image of a raw image comprises:
receiving the raw image from a photographing apparatus;
obtaining a reference image corresponding to the raw image; and
compressing the raw image based on the reference image, to obtain the compressed image.

4. The method according to claim 1 or 2, wherein the obtaining a compressed image of a raw image comprises:
obtaining the raw image through photographing;
obtaining a reference image corresponding to the raw image; and
compressing the raw image based on the reference image, to obtain the compressed image.

5. The method according to claim 3 or 4, wherein the method further comprises:
sending the reference image to the second image device.

6. An image processing method, wherein the method is applied to a second image device and comprises:
receiving, from a first image device, a compressed image of a raw image and compressed target difference information, wherein target difference information is obtained based on difference information between the raw image and a first decompressed image;
decompressing the compressed image, to obtain the first decompressed image; and
performing image processing on the first decompressed image based on the compressed target difference information, to obtain a second decompressed image.

7. The method according to claim 6, wherein the method further comprises:
receiving, from the first image device, a reference image corresponding to the raw image.

8. The method according to claim 7, wherein the decompressing the compressed image, to obtain the first decompressed image comprises:
decompressing, based on the reference image, the compressed image, to obtain the first decompressed image.

9. The method according to claim 7 or 8, wherein both the target difference information and the first decompressed image comprise an image matrix, and each image matrix comprises a plurality of image element values; and
the performing image processing on the first decompressed image based on the compressed target difference information, to obtain a second decompressed image comprises:
decompressing the compressed target difference information, to obtain the target difference information;
performing addition processing on the image matrix comprised in the first decompressed image and the image matrix comprised in the target difference information, to obtain an image matrix comprised in the second decompressed image; and
determining the second decompressed image based on the image matrix comprised in the second decompressed image.

10. An image processing apparatus, wherein the apparatus is used for a first image device and comprises:
an obtaining unit, configured to obtain a compressed image of a raw image;
a decompression unit, configured to decompress the compressed image, to obtain a first decompressed image;
a determining unit, configured to determine target difference information, wherein the target difference information is obtained based on difference information between the raw image and the first decompressed image;
a compression unit, configured to compress the target difference information, to obtain compressed target difference information; and
a sending unit, configured to send the compressed image and the compressed target difference information to a second image device.

11. The apparatus according to claim 10, wherein both the difference information and the target difference information comprise an image matrix, and each image matrix comprises a plurality of image element values; and
the determining unit is specifically configured to:
change, to a preset value, an image element value that falls within a preset threshold range and that is in the image matrix comprised in the difference information, to obtain the image matrix comprised in the target difference information.

12. The apparatus according to claim 10 or 11, wherein the obtaining unit is specifically configured to:
receive the raw image from a photographing apparatus;
obtain a reference image corresponding to the raw image; and
compress the raw image based on the reference image, to obtain the compressed image.

13. The apparatus according to claim 10 or 11, wherein the obtaining unit is specifically configured to:
obtain the raw image through photographing;
obtain a reference image corresponding to the raw image; and
compress the raw image based on the reference image, to obtain the compressed image.

14. The apparatus according to claim 12 or 13, wherein the sending unit is further configured to:
send the reference image to the second image device.

15. An image processing apparatus, wherein the apparatus is used for a second image device and comprises:
a receiving unit, configured to receive, from a first image device, a compressed image of a raw image and compressed target difference information, wherein target difference information is obtained based on difference information between the raw image and a first decompressed image;
a decompression unit, configured to decompress the compressed image, to obtain the first decompressed image; and
an image processing unit, configured to perform image processing on the first decompressed image based on the compressed target difference information, to obtain a second decompressed image.

16. The apparatus according to claim 15, wherein the receiving unit is further configured to:
receive, from the first image device, a reference image corresponding to the raw image.

17. The apparatus according to claim 16, wherein the decompression unit is specifically configured to:
decompress, based on the reference image, the compressed image, to obtain the first decompressed image.

18. The apparatus according to claim 16 or 17, wherein both the target difference information and the first decompressed image comprise an image matrix, and each image matrix comprises a plurality of image element values; and
the image processing unit is specifically configured to:
decompress the compressed target difference information, to obtain the target difference information;
perform addition processing on the image matrix comprised in the first decompressed image and the image matrix comprised in the target difference information, to obtain an image matrix comprised in the second decompressed image; and
determine the second decompressed image based on the image matrix comprised in the second decompressed image.

19. A computer device, comprising a processor and a memory, wherein the processor is coupled to the memory, the memory is configured to store computer instructions, and the processor is configured to execute the computer instructions, so that the image processing apparatus implements the method according to any one of claims 1 to 5 or claims 6 to 9.

20. A computer-readable storage medium, wherein the computer-readable storage medium is configured to store instructions; and when the instructions are executed, the method according to any one of claims 1 to 5 or claims 6 to 9 is implemented.
